# FASCICULE DE BREVET EUROPEEN

(11) **EP 0 908 374 B1**
(45) Date de publication et mention de la délivrance du brevet: **05.06.2002**
(21) Numéro de dépôt: 98402505.6
(22) Date de dépôt: 08.10.1998
(51) Int. Cl.: B62D 25/08

(54) **Dispositif de fixation d'une façade avant à la structure avant d'un véhicule automobile**
Vorrichtung zur Befestigung einer Forderfront an einem Vorderbau eines Kraftfahrzeuges
Means for fixing a front end to the forward structure of a motor vehicle

(30) Priorité: 09.10.1997 FR 9712616
(43) Date de publication de la demande: 14.04.1999
(73) Titulaire: AUTOMOBILES PEUGEOT, 75116 Paris (FR); AUTOMOBILES CITROEN, 92200 Neuilly-sur-Seine (FR)
(72) Inventeur: Ory, Patrick, 78200 Mantes la Ville (FR)
(74) Mandataire: Thinat, Michel

(56) Documents cités:
- FR-A- 2 646 823
- GB-A- 2 191 451
- PATENT ABSTRACTS OF JAPAN vol. 007, no. 110 (M-214), 13 mai 1983 & JP 58 030874 A (NISSAN JIDOSHA KK), 23 février 1983
- PATENT ABSTRACTS OF JAPAN vol. 095, no. 001, 28 février 1995 & JP 06 286657 A (MAZDA MOTOR CORP), 11 octobre 1994

## Description

La présente invention concerne un dispositif de fixation d'une façade avant à la structure avant d'un véhicule automobile.

On connaît, par exemple par le document FR-A-2 646 823 déposé le 10 Mai 1989 aux noms des demanderesses, une structure avant de véhicule automobile dont la façade avant supportant notamment un radiateur vertical, un condenseur et un groupe moto-ventilateur, est fixée à un cadre de maintien de brancards associés à un berceau recevant notamment un groupe moto-propulseur.

Cependant, une telle structure connue a pour inconvénients majeurs que la mise en place de la façade avant est relativement compliquée et qu'en cas de choc appliqué au pare-chocs avant du véhicule à faible vitesse, par exemple inférieure à 15 km/h, le déplacement résultant du pare-chocs provoque une destruction de la façade avant, nécessitant une immobilisation du véhicule pour effectuer le changement de la façade.

Un dispositif analogue présentant les caractéristiques techniques suivant le préambule de la revendication 1 est connu de JP-58030874.

La présente invention a pour but d'éliminer les inconvénients ci-dessus de l'art antérieur.

A cet effet, l'invention propose un dispositif de fixation d'une façade avant à la structure avant d'un véhicule automobile, comprenant deux axes rigides transversaux solidaires respectivement des deux côtés de la façade avant, caractérisé en ce que les axes sont solidaires en partie supérieure de cette façade et qu'ils peuvent s'engager verticalement respectivement dans deux dégagements transversaux en forme de rainure de la structure avant en prenant chacun appui au fond du dégagement correspondant et que deux pions verticaux espacés transversalement relient la partie inférieure de la façade avant à la structure avant et qu'ils sont réalisés en un matériau frangible provoquant une rupture des deux pions lorsqu'un effort prédéterminé résultant d'un choc est appliqué à la façade avant de sorte que la façade avant peut pivoter suivant les deux axes rigides vers l'arrière du véhicule.

De préférence, les deux pions sont solidaires de la partie inférieure de la façade avant et s'engagent respectivement dans deux manchons, de préférence en un matériau à base de caoutchouc, solidaires de la structure avant.

Le dispositif comprend également des moyens de maintien des axes transversaux dans leurs dégagements respectifs.

De préférence, ces moyens de maintien comprennent chacun une vis de fixation traversant le dégagement correspondant au-dessus de l'axe transversal et s'engageant dans un écrou de blocage solidaire de la structure avant.

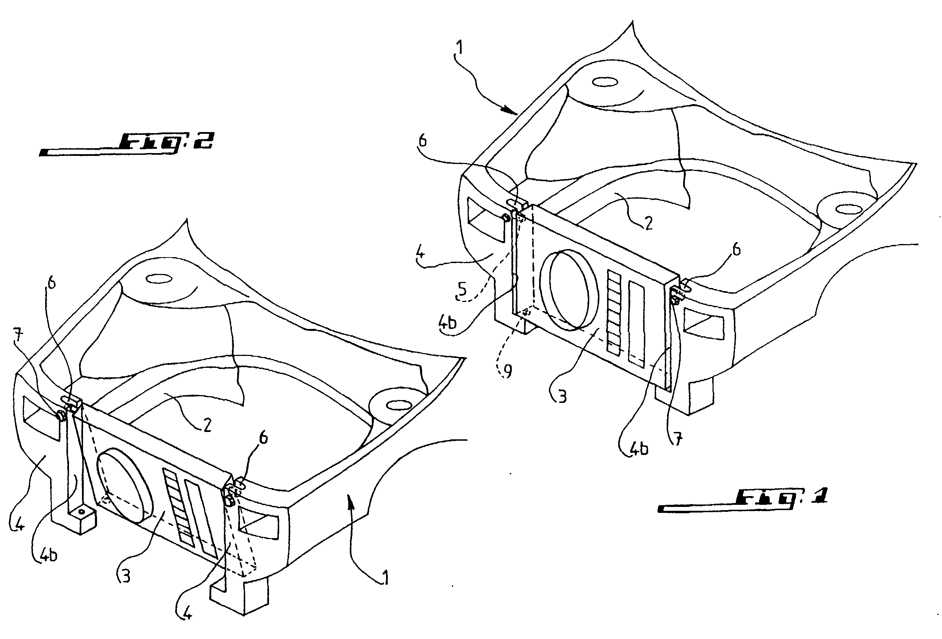

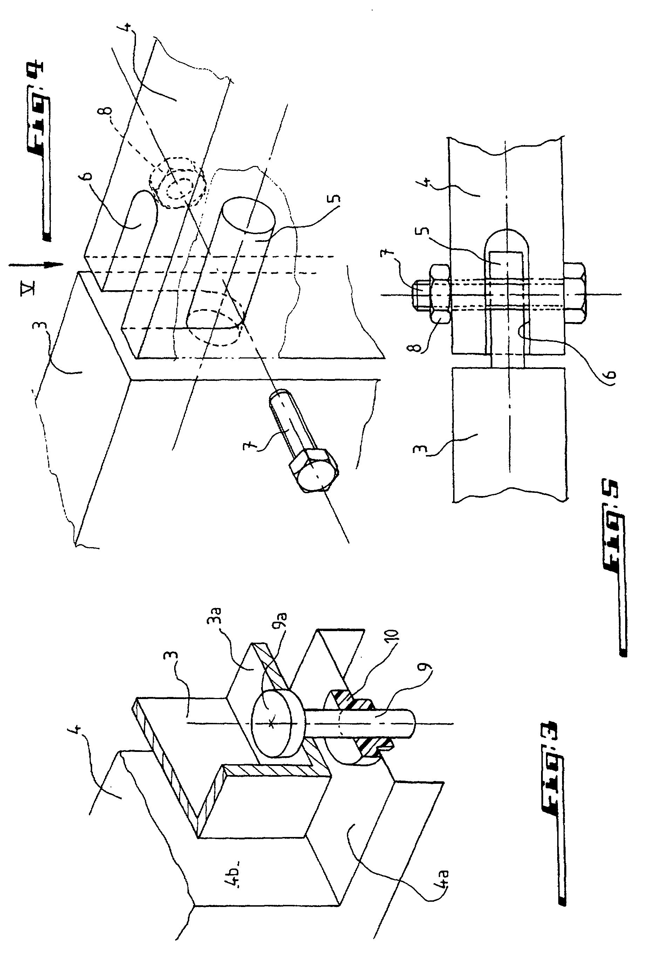

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 est une vue en perspective d'une structure avant pour un véhicule automobile et dont la façade avant conforme à l'invention est en position montée à la structure.
La figure 2 est une vue de la structure de la figure 1 avec la façade avant pivotant suite à un choc appliqué à celle-ci.
La figure 3 est une vue en perspective agrandie avec coupe partielle représentant une liaison entre la partie inférieure de la façade avant et la structure avant du véhicule.
La figure 4 est une vue partielle en perspective éclatée d'une liaison pivotante entre la partie supérieure de la façade avant et la structure du véhicule.
La figure 5 est une vue de dessus suivant la flèche V de la liaison de la figure 4.
En se reportant tout d'abord aux figures 1 et 2, la structure avant 1 de véhicule automobile comprend essentiellement deux brancards 2 sensiblement parallèles, dont un seul est représenté, associés à un berceau (non représenté) destiné à recevoir en particulier un groupe moto-propulseur également non représenté.

La structure avant 1 comprend également une façade avant verticale 3 fixée à la paroi frontale verticale 4 de la structure 1.

La façade avant 3, réalisée à base de matière plastique ou en métal, est destinée à supporter notamment le radiateur, le condenseur, le groupe moto-ventilateur (non représentés) du véhicule.

Selon l'invention, la façade avant 3 est fixée au niveau de sa partie supérieure à la structure 1 par deux axes rigides transversaux coaxiaux et cylindriques 5, solidaires respectivement des deux côtés de la façade avant 3 et s'engageant respectivement dans deux dégagements transversaux en forme de rainure 6 réalisés dans la paroi frontale 4 de la structure 5. Chaque axe cylindrique 5 prend appui au fond horizontal du dégagement correspondant 6 et est maintenu dans celui-ci par une vis 7 traversant le dégagement 6 en passant au-dessus de l'axe 5 et s'engageant dans un écrou de blocage 8 solidaire, par exemple par soudage, de la face arrière de la paroi frontale 4. De la sorte, la façade avant 3 est immobilisée verticalement relativement à la paroi frontale 4 tout en pouvant pivoter autour d'un axe horizontal passant par les deux axes 5 comme on le verra ultérieurement. Les deux axes 5 sont intégrés, par moulage, à la façade avant 3 lorsque celle-ci est en matière plastique ou sont fixés ou soudés à la façade 3 lorsqu'elle est réalisée en métal.

La façade avant 3 est également fixée, à sa partie inférieure, à la structure 1 par deux pions verticaux 9 espacés transversalement et réalisés en un matériau frangible, par exemple en matière plastique, pouvant se rompre par cisaillement lorsqu'un effort prédéterminé résultant d'un choc est appliqué à la façade avant 3.

Chaque pion 9 est de préférence solidaire de la façade 3 en faisant saillie de la paroi inférieure horizontale 3a de celle-ci et s'engage à travers un manchon 10, de préférence en un matériau à base de caoutchouc, solidaire d'une partie épaulée inférieure 4a faisant saillie de la face latérale 4b de la paroi frontale 4 définissant avec l'autre face latérale opposée 4b le logement de la façade avant 3. Chaque pion 9 peut être solidarisé à la paroi inférieure 3a de la façade 3 par une partie formant tête 9a de celui-ci fixée, par exemple par soudage, à la face interne correspondante de la paroi 3a, mais tout autre mode de fixation du pion 9 peut convenir, par exemple, en vissant une partie filetée correspondante du pion 9 à travers la paroi 3a avec la partie 9a faisant office de tête de vis.

Le montage de la façade avant 3 est très simple puisque l'opérateur, dans un même mouvement de descente verticale de la façade, engage les pions 9 dans leurs manchons respectifs 10 et les axes 5 dans leurs dégagements respectifs 6 puis bloque les vis 7 au-dessus des axes 5 pour empêcher tout déplacement vertical de la façade avant 3, les pions 9 empêchant le pivotement de la façade avant 3 suivant ces axes.

Lors d'un choc se produisant à une vitesse inférieure ou égale à 15 km/h, le pare-chocs avant et son armature intérieure peuvent se déplacer d'une distance suffisante vers la structure avant 1 pour entrer en contact avec la façade avant 3. L'effort résultant de ce choc rompt les deux pions 9, résultant en un pivotement de la façade 3 autour des axes 5 vers l'arrière du véhicule comme représenté en figure 2. Un tel pivotement évite ainsi l'endommagement de la façade avant 3 et une immobilisation du véhicule pour remplacer la façade défectueuse. Selon l'invention, il suffit tout simplement de remplacer les deux pions 9 par de nouveaux pions pour que la façade avant 3 soit remise dans son état de fonctionnement d'origine.

Le dispositif de fixation de la façade avant de l'invention permet un montage et un démontage de la structure avant en un seul mouvement vertical de celle-ci et utilise très peu de pièces de fixation. De plus, la façade avant est préservée dans le cas de chocs urbains se produisant à des vitesses relativement faibles, par exemple inférieures ou égales à 15 km/h.

## Revendications

1. Dispositif de fixation d'une façade avant (3) à la structure avant (1) d'un véhicule automobile, comprenant deux axes rigides transversaux (5) solidaires respectivement des deux côtés de la façade avant (3) **caractérisé en ce que** les axes (5) sont solidaires en partie supérieure de cette façade (3) et qu'ils peuvent s'engager verticalement respectivement dans deux dégagements transversaux en forme de rainure (6) de la structure avant (1) en prenant chacun appui au fond du dégagement correspondant (6) et que deux pions verticaux espacés transversalement (9) relient la partie inférieure de la façade avant (3) à la structure avant (1) et qu'ils (9) sont réalisés en un matériau frangible provoquant une rupture des deux pions (9) lorsqu'un effort prédéterminé résultant d'un choc est appliqué à la façade avant (3) de sorte que la façade avant (3) peut pivoter suivant les deux axes rigides (5) vers l'arrière du véhicule.

2. Dispositif selon la revendication 1, **caractérisé en ce que** les deux pions (9) sont solidaires de la partie inférieure de la façade avant (3) et s'engagent respectivement dans deux manchons (10), de préférence en un matériau à base de caoutchouc, solidaires de la structure avant (1).

3. Dispositif selon la revendication 1 ou 2, **caractérisé en ce qu'**il comprend des moyens (7) de maintien des axes transversaux (5) dans leurs dégagements respectifs (6).

4. Dispositif selon la revendication 3, **caractérisé en ce que** les moyens de maintien précités comprennent chacun une vis de fixation (7) traversant le dégagement correspondant (6) au-dessus de l'axe transversal (5) et s'engageant dans un écrou de blocage (8) solidaire de la structure avant (1).

## Patentansprüche

1. Befestigungsvorrichtung einer Vorderfront (3) an der vorderen Struktur (1) eines Kraftfahrzeugs, umfassend zwei steife Querachsen (5), die jeweils mit den zwei Seiten der Vorderfront (3) fest verbunden sind, **dadurch gekennzeichnet, dass** die Achsen (5) im oberen Teil dieser Fassade fest verbunden sind und dass sie jeweils vertikal in zwei querverlaufende Aussparungen in Rillenform (6) der vorderen Struktur (1) dadurch eingreifen können, dass jede sich am Boden der entsprechenden Aussparung (6) aufstützt und dass zwei vertikale quer voneinander entfernte Stifte (9) den unteren Teil der Vorderfront (3) mit der vorderen Struktur (1) verbinden und dass sie aus einem ausfransbaren Material realisiert sind, das einen Bruch der zwei Stifte (9) hervorruft, wenn eine aus einem Aufprall resultierende vorbestimmte Kraft auf die Vorderfront (3) derart angewendet wird, dass die Vorderfront (3) gemäß en zwei steifen Achsen (5) zum hinteren Teil des Fahrzeugs schwenken kann.

2. Vorrichtung gemäß Anspruch 1, **dadurch gekennzeichnet, dass** die zwei Stifte (9) fest mit dem unteren Teil der Vorderfront (3) verbunden sind und jeweils ineinander in zwei Muffen (10) eingreifen, die vorzugsweise aus Kautschuk und mit der Vorderfront (1) fest verbunden sind.

3. Vorrichtung gemäß Anspruch 1 oder 2, **dadurch gekennzeichnet, dass** sie Mittel (7) zum Halten der Querachsen (5) in ihren jeweiligen Aussparungen (6) umfasst.

4. Vorrichtung gemäß Anspruch 3, **dadurch gekennzeichnet, dass** die vorgenannten Mittel zum Halten jedes eine Befestigungsschraube (7) umfassen, die die entsprechende Aussparung (6) oberhalb der Querachse (5) durchqueren und in eine fest mit der vorderen Struktur (1) verbundene Sicherungsmutter (8) eingreifen.

## Claims

1. Means for fixing a front end (3) to the forward structure (1) of a motor vehicle, comprising two transverse rigid pins (5) rigidly connected respectively to the two sides of the front end (3), **characterized in that** these pins (5) are rigidly connected at an upper part of this front end (3) and **in that** they are vertically engageable respectively in two groove shaped transverse recesses (6) of the forward structure (1) by bearing at a bottom of the corresponding recess (6) and **in that** two transversely spaced vertical studs (9) connect the lower part of the front end (3) to the forward structure (1) and **in that** they (9) are made of a breakable material causing a breaking of the two studs (9) when a predetermined strength resulting from an impact is applied to the front end (3), whereby the front end (3) is pivotable about the two rigid pins (5) towards the rear of the vehicle.

2. Device according to claim 1, **characterized in that** the two studs (9) are rigidly connected to the lower part of the front end (3) and are respectively engaged in two sleeves (10), preferably of a rubber based material, which are rigidly connected to the forward structure (1).

3. Device according to claim 1 or 2, **characterized in that** it comprises means (7) for maintaining the transverse pins (5) in their respective recesses (6).

4. Device according to claim 3, **characterized in that** the above mentioned means for maintaining each comprise a fixation screw (7) crossing the corresponding recess (6) above the vertical pin (5) and engaging a locking nut (8) which is rigidly connected to the front end (1).
